# EUROPÄISCHE PATENTANMELDUNG

(11) **EP 0 816 203 A1**
(43) Veröffentlichungstag der Anmeldung: **07.01.1998**
(21) Anmeldenummer: 96113455.8
(22) Anmeldetag: 22.08.1996
(51) Int. Cl.: B62B 5/02

(54) **Transportkarre zum Befördern von Lasten in der Ebene,Steigungen und Stufen**

(30) Priorität: 29.06.1996 DE 19626256; 06.08.1996 DE 19631718
(71) Anmelder: B & F Bauservice GmbH, 24641 Stuvenborn (DE)
(72) Erfinder: Bartsch, Uwe, 24641 Stuvenborn (DE)
(74) Vertreter: Fleck, Thomas, Dr. Dipl.-Chem.

(57) **Zusammenfassung**

Transportkarre zum Befördern von Lasten auf Ebenen,Stufen und Steigungen,mit integrierter wartungsfreier Batterie und einbebauten Ladegerät.Der Energiehaushalt wird positiv beeinflußt indem die Energie die beim bergabfahren entsteht,in die Batterie zurückgespeist wird. Der Antrieb erfolgt über einen Getriebemotor,welcher mindestens zwei Rollenkettenraupen antreibt,die auf den Belastungsseiten von Stützschienen getragen werden.
Außerdem besteht die Möglichkeit mindestens einen der beiden vorhandenen Laufräder mittel des integrierten Getriebemotors anzutreiben.

## Beschreibung

Aufgabe der Erfindung ist es, eine kraftangetriebene Transportkarre zu schaffen,die von einer Bedienungsperson gehandhabt wird und in der Lage ist Lasten in der Ebene auf Steigungen und Stufen vorwärts und rückwärts zu bewegen, wobei Ergonomie,Sicherheit und Kosten im Vordergrund stehen.

Bekannt sind Transportkarren ohne eigenen Antrieb und ohne zusätzliche Einrichtung zur Überwindung von Treppen.Die Konstruktion besteht im wesentlichen aus einem Rohrgestell, das an dem einen Ende zwei Handgriffe aufweist und an dem anderen Ende eine Lastaufnahmeplatte,die winklig zum Rohrgestell angeordnet ist,in deren Nähe sich eine Achse mit zwei Laufrädern befindet um deren Drehpunkt die Karre kippbar ist.
In der Schrift 25 52 179 ist eine Karre zum Steigen auf einer Treppe beschrieben.
Das wesentliche Merkmal dieser Konstruktion ist ein mittig angeordneter Antriebsraupenriemen und seitlich angeordnete Kufen,die ein kippen der Karre verhindern sollen.
Diese Lösung beinhaltet den Nachteil, wenn eine der Kufen zum Tragen kommt,wirkt diese als Bremse und der Abstand zwischen Kufe und Antriebsraupenriemen bildet einen Hebel wodurch ein Drehmoment in der Karre eingeleitet wird und die Karre aus seiner vorgeschriebenen Spur bringt.
In der Schrift 20 23 724
ist eine Transportvorrichtung beschrieben,die schwere Lasten auf Treppenfluchten transportieren kann. Der Transport von Lasten auf Treppenfluchten wird hier gelöst in dem eine Transportvorrichtung mit mindestens einem Transportriemen und zusätzlich ein Transportwagen mit einer schräggestellten Plattform erforderlich ist.
Nachteilig ist hier,daß es schwierig erscheint,zwei Vorrichtungen von einer Bedienungsperson handhaben zu lassen.

In der Schrift 26 21 668
ist ein Treppensteiger Transportkarren beschrieben der im wesentlichen endlose Rollenkettenpaare mit Tastgliedern aufweist welche mit Bremsvorrichtungen zusammen wirken, um ein sicheres transportieren von schweren Lasten auf Treppen zu gewährleisten.Die Kettenpaare sind mit dreieckigen Trägern versehen,welche Tragschuhe halten.Dieser Mechanismus hebt die Transportkarre mit und ohne Last von einer Stufe auf die nächste und sichert durch zusätzliche Einrichtungen,wie Bremsplatten über Tasteinrichtungen gesteuert die Transportkarre gegen unbeabsichtigtes verschieben auf Treppenstufen.
Als Nachteil wird bei dieser Ausführung eine sehr aufwendige und Komplizierte und damit auch eine Störungsanfällige Konstruktion hingewiesen.
Die Schrift DE 32 42 880 A1
beschreibt eine Karre mit elektrischen Antrieb,besonders geeignet zum Transport von schweren Lasten und sperrigen Gegenständen auf Treppen.Das besondere Merkmal dieser Erfindung ist eine angetriebene Achse an deren Enden sich jeweils ein dreieckiger Träger befindet.An den Trägerenden sind drehbar gelagerte Räder angeordnet.
Als Nachteil wird angeführt,das der dreieckige Träger getrieben und gebremst werden kann,jedoch nicht die einzelnen Räder auf dem dreieckigen Träger.Somit ist ein sicheres befahren von Stufen nicht gewährleistet.
Die Schrift 23 62 340
zeigt eine ähnliche Erfindung wie die Schrift 25 52 179 vom gleichen Anmelder.Der Unterschied liegt darin,daß die seitlichen Kufen durch endlose elastische Laufbänder ersetzt sind und die Kufen als Laufbandstützen dienen.
Hier gilt der gleiche Nachteil wie zur Schrift 25 52 179 gesagt,da die Innenseite des Laufbandes auf der Stützkufe ebenso bremst wie die Kufe direkt auf den Treppenstufen.

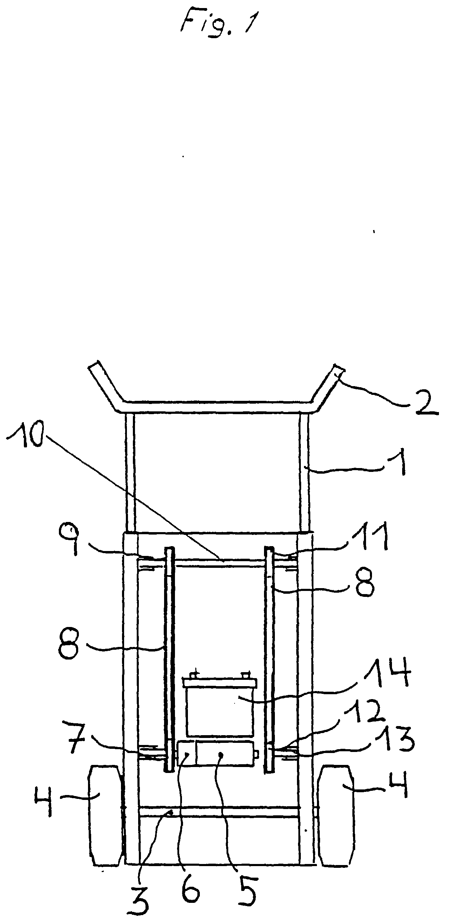

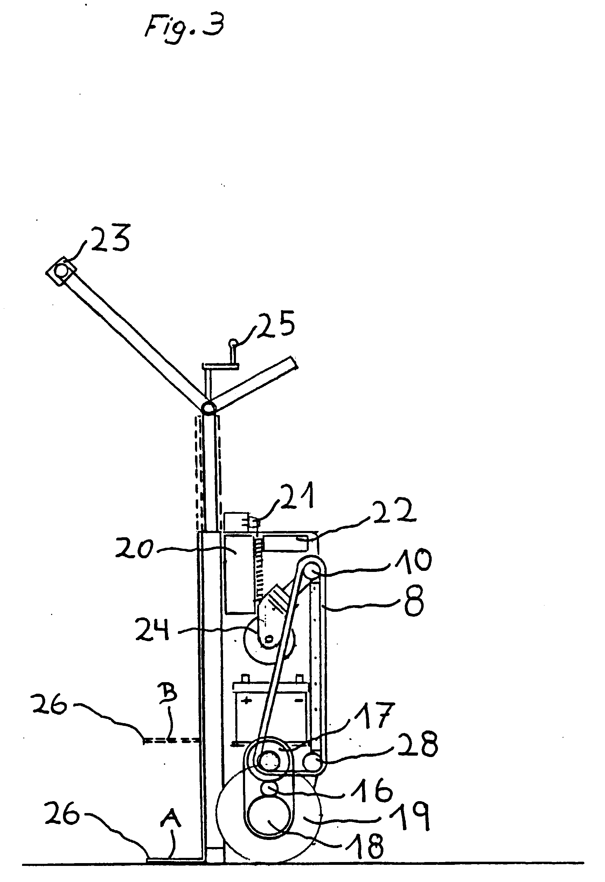

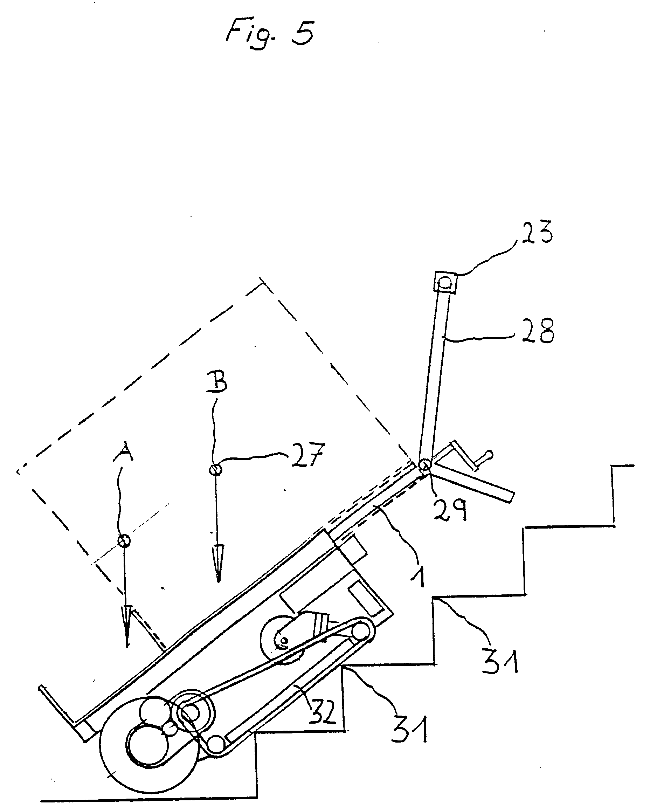

### DIE ERFINDUNG WIRD MIT DEN FIGUREN 1 BIS 6 NÄHER DARGESTELLT UND NACHSTEHEND ERLÄUTERT:

FIGUR 1
   zeigt eine Transportkarre mit einem Antriebsmotor und zwei Kettenraupen.
FIGUR 2
   zeigt eine Transportkarre mit einem Differenzialantrieb.
FIGUR 3
   zeigt die Seitenansicht der Transportkarre.
FIGUR 4
   zeigt die Seitenansicht der Transportkarre in der Ebene.
FIGUR 5
   zeigt die Seitenansicht der Transportkarre beim befahren von Treppenstufen.
FIGUR 6
   zeigt die Rollenkettenraupe auf Treppenstufen.

### EINE LÖSUNG DER ERFINDUNG WIRD IN FIG.1 DARGESTELLT

und besteht aus einem Rohrrahmen 1 einem Querträger 2 der gleichzeitig,als Handgriff dient.Im unteren Teil befindet sich eine Achse 3 welche zwei Laufräder 4 trägt.Zwischen dem Rohrrahmen 1 ist ein Antriebsmotor 5 mit einem Planetengetriebe 6 untergebracht.Der Getriebemotor 5/6 treibt ein dazu Koaxial gelagertes Kettenrad 7 auf dem eine Rollenkettenraupe 8 läuft welche um ein zweites Kettenrad 9 umgelenkt und von der Achse 10 getragen wird und fest damit verbunden ist.Die Achse 10 weist ein drittes Kettenrad 11 auf das fest mit der Achse 10 verbunden ist und ebenfalls eine Rollenkettenraupe 8 treibt,welche um das Kettenrad 12 auf dem Zapfen 13 umgelenkt wird.

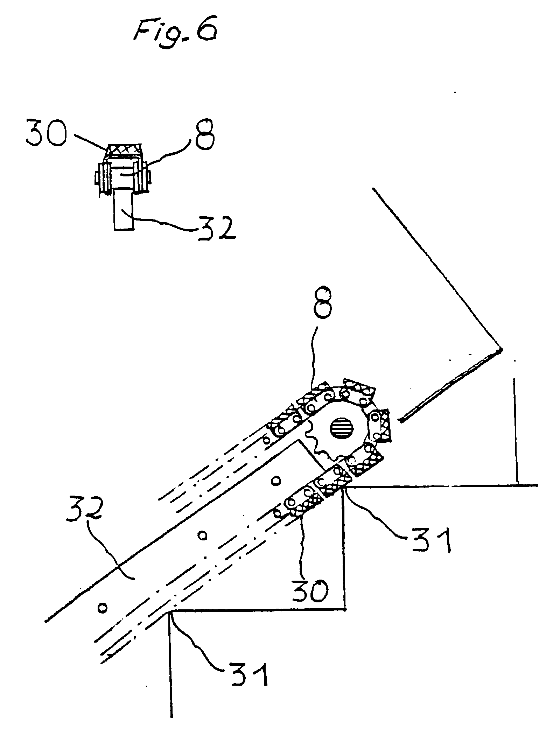

Als Energiequelle ist eine wartungsfreie vollkommen geschlossene Batterie 14 vorgesehen.Die Rollenkettenraupen 8 werden in FIG.6 näher erläutert.

### FIGUR 2

zeigt eine Lösung der Transportkarre mit einer Differenzialgetriebeachse 15 an deren Enden jeweils ein Zahnritzel 16 befestigt ist und mit den Zahnrädern 17/18 kämmt.
Die Zahnräder 17 treiben die Rollenkettenraupen 8 an, während die Zahnräder 18 die Antriebsräder 19 treiben,sodas mit dieser Ausführung beide Antriebsräder getrieben sind und Kurven gefahren werden können.Ein einbebautes Ladegerät 20 mit einem Netzanschlußstecker 21 ermöglicht das Laden der Batterie.
Eine elektrische Steuerung 22 und ein Fahrschalter 23 ermöglicht ein stufenloses vorwärts- und rückwärts fahren.

### FIGUR 3

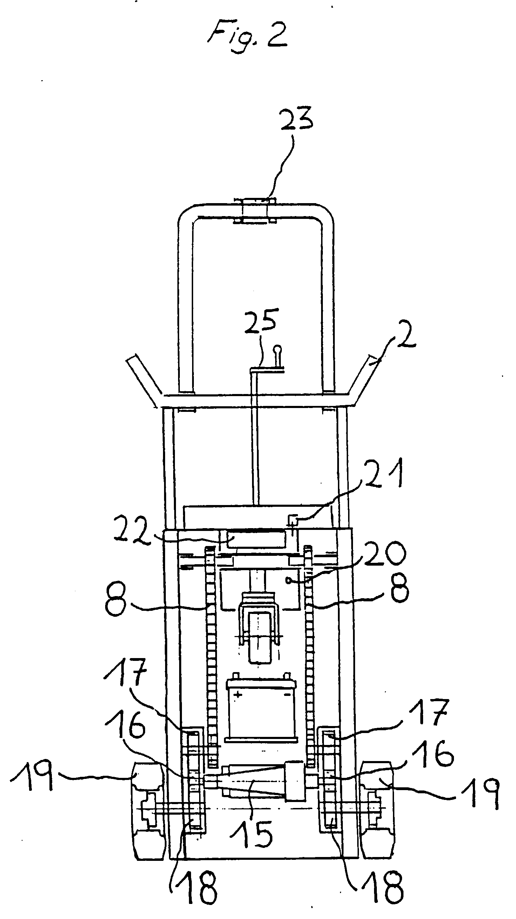

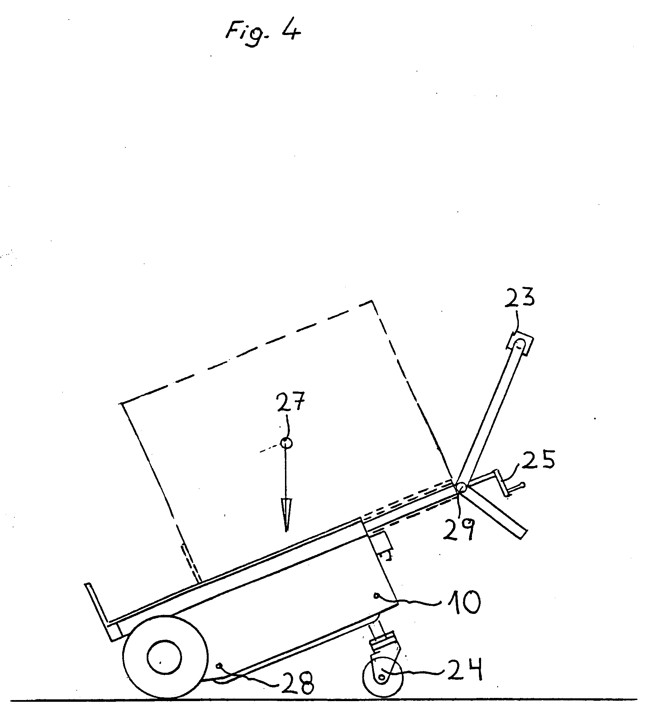

hier ist die Seitenansicht der Transportkarre dargestellt.
Die einzelnen Positionen aus FIG.2 werden in dieser Ansicht wiederholt.Außerdem ist eine Stützrolle 24 dargestellt,die um Achse 10 in das gehäuse der Transportkarre geklappt ist.Mit der Kurbel 25 kann der Lastträger 26 von Punkt A nach Punkt B gebracht werden.Um den Lastschwerpunkt 27 in FIG.4 zu finden,gegebenenfalls zwischen die Kettenachsen 10 und 28 zu bringen.Hiermit wird eine sichere Lastverteilung in der Ebene oder auf Treppenstufen gewährleistet.

### FIGUR 5

zeigt die Transportkarre beim Befahren von Treppenstufen.
Die Verschiebung des Lastenschwerpunktes von Punkt A zum Punkt B ist hier sinnvoll sichtbar.Der Bedienungsbügel 28 mit dem Fahrschalter 23 ist um den Punkt 29 schwenkbar und im Rohrgestell des Rahmens 1 verschiebbar um die Bedienbarkeit ergonomisch gestalten zu können.

### FIGUR 6

zeigt die Rollenkettenraupe 8 wobei jedes zweite Glied einen Gummistollenträger 30 aufweist womit Treppenstufen befahren werden können.
Der Druck der von den Treppenstufen 31 auf die Rollenkettenraupe 8 übertragen wird,fängt die Rollenkettenstützschiene 32 auf und sorgt dafür,daß hier durch rollende Reibung ein guter Wirkungsgrad erreicht wird.

## Patentansprüche

1. Transportkarre zum Befördern von Lasten in der Ebene auf Steigungen und Stufen welche mit einem Antrieb versehen ist,eine Radachse mit Laufrädern aufweist und ein Rahmengestell ähnlich einer Sackkarre aufweist,
DADURCH GEKENNZEICHNET,daß mindestens ein Laufrad angetrieben werden kann und zum Befahren von Stufen und Treppen mindestens zwei endlose Rollenkettenraupen welche auf der äußeren Seite bei jedem zweiten Kettenglied Träger,die mit Gummi-oder Kunststoffstollen besetzt sind,aufweisen und deren Innenseite von je einer Trägerschiene unterstützt sind,auf welcher sich die Rollen der Rollenkettenraupe abstützen wenn die Treppenstufenkanten darauf drücken.

2. TRANSPORTKARRE NACH ANSPRUCH 1 DADURCH GEKENNZEICHNET,
daß als Energiequelle eine vollkommen geschlossene wartungsfreie Batterie vorgesehen ist,welche auch für Schräglage geeignet ist.

3. TRANSPORTKARRE NACH ANSPRUCH 1 UND 2 DADURCH GEKENNZEICHNET,
daß ein eingebautes Ladegerät für die Batterie vorgesehen ist.

4. TRANSPORTKARRE NACH ANSPRUCH 1,2,UND 3 DADURCH GEKENNZEICHNET,da die Rollenkettenraupen durch einen eingebauten Antrieb vorwärts und rückwärts angetrieben werden können.

5. TRANSPORTKARRE NACH ANSPRUCH 1 BIS 4 DADURCH GEKENNZEICHNET,daß eine mit einem Antriebsmotor versehene Differenzialachse vorgesehen ist,welche über ein Vorgelege die beiden Laufräder und die Rollenkettenraupen vorwärts und rückwärts antreiben und bremsen kann.

6. TRANSPORTKARRE NACH DEN VORGENANNTEN ANSPRÜCHEN,DADURCH GEKENNZEICHNET,daß eine Steuerung vorgesehen ist welche eine Geschwindigkeitsregelung und eine Drehrichtungssteuerung des eingebauten Antriebes erlaubt.

7. TRANSPORTKARRE NACH DEN VORGENANNTEN ANSPRÜCHEN,DADURCH GEKENNZEICHNET,daß das Lastaufnahmemittel höhenverstellbar ist.

8. TRANSPORTKARRE NACH DEN VORGENANNTEN ANSPRÜCHEN,DADURCH GEKENNZEICHNET,daß eine heraus klappbare Stützrolle vorgesehen ist.

9. TRANSPORTKARRE NACH DEN VORGENANNTEN ANSPRÜCHEN,DADURCH GEKENNZEICHNET,daß Höhenverstellbarkeit das des Lastaufnahmemittels per Handkurbel oder auch mittels eines elektrischen Spindelantriebes erfolgt.
